# EUROPÄISCHE PATENTSCHRIFT

(11) **EP 3 099 956 B1**
(45) Veröffentlichungstag und Bekanntmachung des Hinweises auf die Patenterteilung: **10.10.2018**
(21) Anmeldenummer: 14824411.4
(22) Anmeldetag: 15.12.2014
(51) Int. Cl.: F16D 55/00, F16D 65/00

(54) **SCHEIBENBREMSE UMFASSEND EINE SCHWINGUNGSDÄMPFUNGSEINRICHTUNG MIT EINER ZUSATZMASSE UND BAUSATZ MIT EINER DERARTIGEN SCHEIBENBREMSE**
DISC BRAKE COMPRISING A VIBRATION DAMPING DEVICE WITH AN ADDITIONAL MASS, AND KIT WITH SUCH A DISC BRAKE
FREIN À DISQUE COMPRENANT UN DISPOSITIF D'AMORTISSEMENT DES VIBRATIONS MUNI D'UNE MASSE ADDITIONNELLE ET KIT COMPRENANT UN FREIN À DISQUE DE CE TYPE

(30) Priorität: 28.01.2014 DE 102014001061
(43) Veröffentlichungstag der Anmeldung: 07.12.2016
(73) Patentinhaber: Lucas Automotive GmbH, 56070 Koblenz (DE)
(72) Erfinder: MALLMANN, Markus, 56291 Pfalzfeld (DE); BECKER, Marco, 56651 Oberduerenbach (DE)
(74) Vertreter: Schmidt, Steffen J.
(86) Internationale Anmeldenummer: PCT/EP2014/077763
(87) Internationale Veröffentlichungsnummer: WO 2015/113693

(56) Entgegenhaltungen:
- EP-A1- 0 727 590
- EP-A1- 2 174 034
- EP-A1- 2 446 165
- EP-A2- 0 806 585
- EP-A2- 1 688 636
- DE-A1- 10 305 308
- US-A- 5 887 686

## Beschreibung

Die Erfindung betrifft eine Scheibenbremse, die insbesondere als Festsattel-Scheibenbremse oder Schwimmsattel-Scheibenbremse für ein Fahrzeug ausgeführt ist, umfassend eine Bremsbelaganordnung mit einem Reibbelag und einer Belagrückenplatte, wobei der Reibbelag mit einer Bremsscheibe zum Erzielen einer Bremswirkung in Wechselwirkung bringbar ist, und zumindest eine an einem Bremssattel oder an einem Bremsträger angeordnete Schwingungsdämpfungseinrichtung mit zumindest einer Zusatzmasse.

Eine derartige Scheibenbremse ist beispielsweise aus dem Dokument EP 0 380 769 B1 bekannt. Bei einer darin beschriebenen Festsattel-Scheibenbremse werden Zusatzmassen derart in Umfangsrichtung am Gehäuse angebracht, dass sie radial neben der Bremsscheibe positioniert sind. Alternativ können die Zusatzmassen direkt an einem der Gehäuseteile angegossen sein, sodass eine nachträgliche Befestigung entfällt. Darüber hinaus ist in dem Dokument EP 0 380 769 B1 eine innen umgreifende Schwimmsattel-Scheibenbremse beschrieben, bei der an einer vom Kolben abgewandten Seite eines Schenkels eines im Wesentlichen U-förmig ausgebildeten Bremsgehäuses eine Zusatzmasse befestigt ist. In einer weiteren Ausführungsform sind neben Ausnehmungen zur Führung von Bremsbacken Zusatzmassen über eine elastische Kleberschicht an einem Bremsträger angeklebt.

Durch den Reibkontakt zwischen dem Reibbelag und der Bremsscheibe werden häufig, beispielsweise aufgrund des sogenannten Haftgleiteffekts (Stick-Slip-Effekt), Reibschwingungen in die Bremsbelaganordnung eingeleitet. Diese Reibschwingungen werden von der Bremsbelaganordnung auf daran angrenzende Komponenten der Scheibenbremse, insbesondere auf den Bremskolben oder den Bremsträger, übertragen. Dies wirkt sich insbesondere dann negativ aus, wenn die Frequenz der Reibschwingung mit der Eigenresonanzfrequenz der Bremsbelaganordnung und/oder einer oder mehrerer der anderen Komponenten der Scheibenbremse übereinstimmt. In Folge einer derartigen Übertragung einer Reibschwingung verlässt die Reibschwingung die Scheibenbremse als akustisch wahrnehmbare, unangenehm empfundene Schallwelle ("Quietschen").

Die Übertragung der Reibschwingung kann wirkungsvoll unterbunden werden, wenn die Resonanzfrequenzen aneinander angrenzender Komponenten der Scheibenbremse, zum Beispiel der Bremsbelaganordnung und dem Bremssattel, nicht übereinstimmen. Dies ist einer Dämpfung der Reibschwingung gleichzusetzen. Aus dem Stand der Technik ist es bekannt, hierzu die Masseverteilung in (zumindest einem Teil) der Scheibenbremse durch zusätzliche Gewichte, hier bezeichnet als Zusatzmassen, zu beeinflussen. Um derartige Zusatzmassen an der Scheibenbremse zu befestigen, werden bei herkömmlichen Scheibenbremsen die Zusatzmassen direkt auf eine Oberfläche des Bremsträgers geklebt.

Das Dokument EP 0 806 585 A2 offenbart einen Bremssattel für Scheibenbremsen, mit einer Aufnahme für mindestens einen Kolben zum Bewegen einer Bremsbacke senkrecht zu deren Reibebene und mit mindestens einer Einrichtung zur Führung der Bremsbacke parallel zur Reibebene. Dabei ist die Einrichtung zur parallelen Führung mit einem Geräuschdämpfungsmaterial versehen, um von der Bremsbacke getrennt zu sein.

Es ist eine Aufgabe der vorliegenden Erfindung, eine Scheibenbremse der eingangs bezeichneten Art bereitzustellen, bei der die Massenverteilung der Scheibenbremse flexibel und schnell einstellbar ist und sicher beibehalten wird.

Die Aufgabe wird durch eine Scheibenbremse der eingangs bezeichneten Art gelöst, bei der die Zusatzmasse als separates Bauteil ausgebildet ist und die Schwingungsdämpfungseinrichtung ferner einen an dem Bremssattel oder an dem Bremsträger befestigten Aufnahmebolzen umfasst, über den die Zusatzmasse an dem Bremssattel oder an dem Bremsträger fixierbar ist. Vorzugsweise steht dabei der Aufnahmebolzen mit einer in der Zusatzmasse ausgebildeten Aussparung in Eingriff. Pro Schwingungsdämpfungseinrichtung kann/können also eine Zusatzmasse oder mehrere Zusatzmassen vorgesehen sein und je eine oder mehrere Schwingungsdämpfungseinrichtung/en kann/können an dem Bremssattel oder/und dem Bremsträger angeordnet, bzw. über je einen Aufnahmebolzen daran befestigt sein.

Folglich kann die Zusatzmasse an beliebigen Positionen an dem Bremssattel oder an dem Bremsträger der Scheibenbremse positioniert werden. Insbesondere kann die Zusatzmasse an solchen Positionen des Bremssattels oder des Bremsträgers positioniert werden, an denen eine sichere Befestigung mittels einer oben beschriebenen Klebeverbindung nicht einfach hergestellt werden kann. Da der Kontakt zwischen der Zusatzmasse und dem Bremssattel oder dem Bremsträger über den Aufnahmebolzen hergestellt ist, kann eine Zusatzmasse universell an beliebigen Positionen an dem Bremssattel oder an dem Bremsträger befestigt werden. Oberflächenbeschaffenheiten des Bremssattels/Bremsträgers spielen für die Montage der Zusatzmasse keine Rolle.

Vorzugsweise ist an einem dem Bremssattel oder dem Bremsträger zugewandten Teil des Aufnahmebolzens ein erstes Gewinde ausgebildet, welches über ein an dem Bremssattel oder an dem Bremsträger ausgebildetes, zu dem ersten Gewinde komplementäres zweites Gewinde mit dem Bremssattel oder dem Bremsträger fest verbunden ist. Das zweite Gewinde kann insbesondere an einer Führungsschraube einer Führungseinrichtung des Bremssattels ausgebildet sein, über die der Bremssattel an dem Bremsträger befestigt ist. Der Aufnahmebolzen entspricht dann einer Verlängerung der Führungsschraube. Ein von dem Bremssattel/Bremsträger weiter als der zugewandte Teil entfernter Werkzeugaufnahmeteil des Aufnahmebolzens ist dann vorzugsweise mehrkantförmig, beispielsweise sechskantförmig, ausgestaltet, sodass der Aufnahmebolzen mittels herkömmlicher Montagewerkzeuge in das zweite Gewinde eingeschraubt werden kann. Somit kann die Montage schnell, einfach und kostengünstig erfolgen. Ein Aushärten eines etwaigen Klebstoffes ist nicht erforderlich und die Schwingungsdämpfungseinrichtung ist sofort nach der Montage belastbar.

Gemäß der Erfindung ist der Aufnahmebolzen länglich ausgestaltet und weist an seiner Mantelfläche eine in seiner Längsrichtung ausgerichtete Haltestruktur, beispielsweise eine Rillenstruktur, auf. Zusätzlich oder alternativ ist der Aufnahmebolzen als Haltestruktur auch eine quer zu seiner Längsrichtung ausgerichtete Rillenstruktur aufweisen. Die Rillenstruktur kann beispielsweise durch eine spanende Bearbeitung oder durch eine nicht spanende Bearbeitung, beispielsweise eine Kaltumformung, hergestellt sein. In einem besonders einfachen Fall handelt es sich bei der Rillenstruktur um ein Gewinde, welches beispielsweise dieselbe Form aufweist wie das erste oder das zweite Gewinde. Die Rillenstruktur erstreckt sich vorzugsweise nicht über die Oberfläche des Aufnahmebolzens in der Umgebung der Rillenstruktur hinaus, d.h. im Bereich der Rillenstruktur weist der Aufnahmebolzen im Wesentlichen denselben Außendurchmesser auf wie im Bereich des restlichen Aufnahmebolzens. Alternativ kann jedoch auch vorgesehen sein, dass sich die Rillenstruktur über die Mantelfläche des Aufnahmebolzens in der Umgebung der Rillenstruktur hinaus erstreckt.

Die Zusatzmasse ist durch Verpressen an dem Aufnahmebolzen derart fixierbar, dass die Rillenstruktur in einer Oberfläche der Zusatzmasse verkrallt ist. In diesem Fall ist es von Vorteil, wenn die Rillenstruktur sich über die Mantelfläche hinaus erstreckt, denn beim Verpressen gelangen dann zuerst die Spitzen der Rillenstruktur mit der Oberfläche der Zusatzmasse in Kontakt. Durch den im Bereich der Spitzen wirkenden hohen lokalen Druck werden die Spitzen wirkungsvoll in die Oberfläche eingepresst. Folglich kann die Zusatzmasse anhand dieses Verfahrens einfach und sicher an dem Aufnahmebolzen befestigt werden.

Vorzugsweise sind der Aufnahmebolzen und/oder die Zusatzmasse im Wesentlichen zylinderförmig ausgestaltet. Die Teile können demnach beispielsweise durch eine spanende Bearbeitung oder eine nicht spanende Bearbeitung, beispielsweise eine Kaltumformung, hergestellt werden. In einer Ausführungsform der Erfindung ist der Aufnahmebolzen im Wesentlichen als Außengewindebolzen ausgestaltet, der in seinem Werkzeugaufnahmebereich einen außensechskantförmigen Schraubenkopf aufweist. Angrenzend an den Schraubenkopf ist dabei vorzugsweise eine Scheibe ausgebildet. Die Zusatzmasse ist hingegen als Zylinder ausgestaltet, wobei dieser vorzugsweise eine zentrale Durchgangsbohrung entlang der Längsachse aufweist. Alternativ dazu kann zumindest eine der beiden Endflächen eine zentrale Aussparung, insbesondere in Form einer Kernlochbohrung, aufweisen, die von dem Aufnahmebolzen im montierten Zustand durchsetzt ist. Um eine Anpassung hinsichtlich der Lage der Zusatzmasse zu ermöglichen, kann außerdem vorgesehen sein, dass die Durchgangs- oder Kernlochbohrung exzentrisch zur Längsachse eingebracht ist. Zur einfachen Montage kann die Zusatzmasse im Ausgangszustand einen Innendurchmesser aufweisen, der größer ist als der Außendurchmesser des Aufnahmebolzens, sodass die Zusatzmasse einfach auf den Aufnahmebolzen kontaktfrei aufgesteckt werden kann. Im Anschluss kann die Zusatzmasse mit den Aufnahmebolzen, wie vorstehend beschrieben, verpresst werden. Alternativ ist es jedoch auch denkbar, dass der Innendurchmesser der Zusatzmasse kleiner als der Außendurchmesser des Aufnahmebolzens ist, sodass die Zusatzmasse nach dem Aufstecken auf den Aufnahmebolzen mit dem Aufnahmebolzen in Reibkontakt steht.

Erfindungsgemäß kann zur Fixierung der Zusatzmasse an dem Aufnahmebolzen außerdem vorgesehen sein, dass in dem Aufnahmebolzen an einem dem Bremssattel beziehungsweise dem Bremsträger abgewandten Ende eine Ringnut ausgebildet ist. In diesem Fall ist vorgesehen, dass ein herkömmlicher Sicherungsring, vorzugsweise ein Außensicherungsring, mit der Ringnut in Eingriff steht und somit den Aufnahmebolzen umgreift. Der Sicherungsring kann optional mit der Zusatzmasse im Bereich einer ihrer Endflächen in Kontakt stehen, sodass die Zusatzmasse bereits durch den Sicherungsring spielfrei an dem Aufnahmebolzen gehalten wird. Wenn die Zusatzmasse jedoch auf den Aufnahmebolzen gepresst ist, kann die Ringnut alternativ gegenüber der Zusatzmasse beabstandet sein, sodass der Sicherungsring einfacher in die Ringnut eingebracht werden kann. Die Ringnut ist erfindungsgemäß in beiden Fällen derart positioniert, dass die Zusatzmasse in Längsrichtung des Aufnahmebolzens einen geringeren Abstand zu dem Bremssattel bzw. Bremsträger aufweist als die Ringnut.

In einer zweiten Ausführungsform der Erfindung weist die Zusatzmasse einen Basisabschnitt und einen Blockabschnitt auf. Diese Zusatzmasse kann beispielsweise nicht zylindersymmetrisch ausgestaltet sein. Der Basisabschnitt ist dabei in Form einer flachen Befestigungszunge ausgestaltet. Die Befestigungszunge liegt dann flächig an dem Bremssattel oder an dem Bremsträger an. Dadurch wird der zusätzliche Bauraum, den die Zusatzmasse einnimmt, minimiert. Auch kann aufgrund des Reibkontakts zwischen der Befestigungszunge und dem Bremssattel/Bremsträger sichergestellt werden, dass die Zusatzmasse eine bestimmte Stellung beibehält und somit die Massenverteilung in der Scheibenbremse beibehalten wird. Wenn die Zusatzmasse einen Basisabschnitt und eine Aussparung aufweist, ist diese Aussparung vorzugsweise im Bereich des Basisabschnitts ausgebildet. Die Aussparung ist vorzugsweise als Kernlochbohrung mit oder ohne angefaste Kanten ausgestaltet, wobei die Bohrachse senkrecht zu einer Mittensymmetrieebene und einer Oberfläche des flächigen Basisabschnitts verläuft. Wenn die Zusatzmasse also einen Basisabschnitt und einen Blockabschnitt aufweist, ist sie vorzugsweise transversal zu dem Aufnahmebolzen angeordnet. Die Aussparung kann beispielsweise zentral in dem Basisabschnitt angeordnet sein. Erfindungsgemäß haben der Basisabschnitt und der Blockabschnitt zumindest eine gleiche Mittensymmetrieebene.

In einer Weiterbildung der Erfindung kann insbesondere vorgesehen sein, dass eine Mehrzahl an Zusatzmassen an verschiedenen Aufnahmestellen an dem Bremssattel oder an dem Bremsträger fixierbar ist. Die Zusatzmassen können dabei beispielsweise über im Wesentlichen gleiche Aufnahmebolzen befestigt sein. Somit kann der Aufnahmebolzen als universell einsetzbares Bauteil in großen Stückzahlen produziert werden. Zumindest zwei der Zusatzmassen können an bezüglich der Bremsscheibe entgegengesetzten Seiten des Bremssattels oder des Bremsträgers angeordnet sein. Somit kann die Massenverteilung der gesamten Bremse variabel eingestellt werden.

In einer Variante der Erfindung weisen zumindest zwei der Zusatzmassen unterschiedliche Massen (Gewichte) auf. Wenn diese Zusatzmassen einen Basisabschnitt und einen Blockabschnitt aufweisen, können die Massen der Basisabschnitte im Wesentlichen gleich sein, sodass sich die Zusatzmassen lediglich durch die Massen der Blockabschnitte unterscheiden. Die Blockabschnitte können im montierten Zustand bezüglich der Basisabschnitte unterschiedlich ausgerichtet sein. Beispielsweise können die Blockabschnitte antiparallel zueinander bezüglich der Basisabschnitte ausgerichtet sein. Wenn also ein Blockabschnitt bezüglich eines Basisabschnitts, insbesondere bezüglich der Mitte der Aussparung, in Vorwärtsrichtung längs des Umfangs der rotierenden Bremsscheibe ausgerichtet ist, dann ist ein anderer Blockabschnitt bezüglich eines Basisabschnitts in Rückwärtsrichtung orientiert. Alternativ kann auch eine Zusatzmasse radial einwärts bezüglich der Bremsscheibe und eine Zusatzmasse radial auswärts bezüglich der Bremsscheibe orientiert sein.

Wenn die Zusatzmasse einen Basisabschnitt aufweist, kann an ihm außerdem eine Rillenstruktur ausgebildet sein, die in einer Oberfläche des Bremssattels oder des Bremsträgers verkrallt ist. Dies erlaubt es, die Massenverteilung in der Scheibenbremse auch bei hohen externen Kräften beizubehalten. Die Rillenstruktur kann dabei alle Merkmale der oben beschriebenen Rillenstruktur des Aufnahmebolzens aufweisen.

Alternativ kann auch vorgesehen sein, dass im Bereich des Angriffs des Basisabschnitts der Zusatzmassen am Bremssattel Vorsprünge an diesen angeformt sind, welche dem Verdrehen der positionierten Zusatzmasse entgegenwirken und/oder nur einen Einbau in einer vordefinierten Position zulassen.

Die Massenverteilung kann insbesondere mittels mehrerer Zusatzmassen besonders flexibel eingestellt werden, indem beispielsweise zwei oder mehrere Zusatzmassen über denselben Aufnahmebolzen an derselben Aufnahmestelle am Bremssattel oder am Bremsträger fixierbar sind. Die jeweiligen Zusatzmassen können unterschiedliche Gewichte aufweisen. Insbesondere können, beispielsweise um Bauraum einzusparen, transversal an dem Aufnahmebolzen angeordnete Zusatzmassen mit Basis- und Blockabschnitt mit longitudinal an dem Aufnahmebolzen angeordneten Zusatzmassen kombiniert werden. Mit anderen Worten, Zusatzmassen unterschiedlicher Geometrien können auf engem Raum kombiniert werden, um die Massenverteilung des Bremsträgers flexibel, aber dennoch bauraumeffizient einzustellen.

In einer weiteren Ausführungsform der Erfindung ist die Zusatzmasse bzw. sind die Zusatzmassen abschnittsweise oder vollständig aus einem Material hergestellt, welches eine höhere Dichte aufweist als das Material, aus dem der Bremssattel oder der Bremsträger, insbesondere in der Umgebung der jeweiligen Aufnahmestelle, hergestellt ist. Zusätzlich oder alternativ kann dann, wenn die Zusatzmasse einen Basisabschnitt und einen Blockabschnitt aufweist, ferner die Elastizität der Zusatzmasse größer sein als die des Bremssattels/Bremsträgers, insbesondere in der Umgebung der jeweiligen Aufnahmestelle. Somit kann aufgrund der Materialauswahl, insbesondere wenn an dem Basisabschnitt eine Rillenstruktur ausgebildet ist, mit kleinen Zusatzmassen gleichzeitig eine hohe Dämpfungswirkung und eine optimale Befestigung an dem Bremssattel/Bremsträger erreicht werden.

Erfindungsgemäß kann die Scheibenbremse als Festsattel-Scheibenbremse oder als Schwimmsattel-Scheibenbremse ausgestaltet sein. Falls die Scheibenbremse als Festsattel-Scheibenbremse ausgestaltet ist, umgreift der Bremssattel die Bremsscheibe und die Schwingungsdämpfungseinrichtung bzw. die Schwingungsdämpfungseinrichtungen sind vorzugsweise an dem Bremssattel angeordnet.

Für den Fall, dass die Scheibenbremse als Schwimmsattel-Scheibenbremse ausgestaltet ist, d.h. der Bremssattel beweglich/verlagerbar an dem ortsfesten Bremsträger angebracht ist, können die Schwingungsdämpfungseinrichtungen jeweils an dem Bremssattel oder an dem Bremsträger angeordnet sein. Der Bremssattel kann dabei über eine Führungsschraube einer Führungseinrichtung an dem Bremsträger angebracht sein, entlang derer beim Bremsvorgang, d.h. beim in Wechselwirkung bringen von Reibbelag und Bremsscheibe, eine Relativbewegung zwischen dem Bremssattel und dem Bremsträger gerichtet ist. In diesem Fall ist der Aufnahmebolzen als Verlängerung der Führungsschraube über eine Oberfläche des Bremssattels hinaus ausgestaltet.

Die Führungsschraube ist hierbei vorzugsweise in einem Eckbereich der Scheibenbremse angeordnet. Da ein separater Aufnahmebolzen in diesem Fall nicht montiert werden muss, ist die Scheibenbremse schnell und einfach herstellbar. Die Zusatzmasse kann hierzu einfach auf die durch den Aufnahmebolzen verlängerte Führungsschraube aufgesteckt werden und daran, beispielsweise durch Verpressen oder Verschrauben, fixiert werden. Eine derartige Befestigung der Zusatzmasse hat außerdem den Vorteil, dass die Zusatzmasse direkt an einem die Reibschwingungen übertragenden Bauteil, der Führungsschraube, befestigt ist. Die schwingungsdämpfende Wirkung der Zusatzmasse wird dadurch verstärkt. Folglich reichen betragsmäßig vergleichsweise geringe Gewichte der Zusatzmassen aus, um die Übertragung der Reibschwingungen wirkungsvoll zu unterbinden.

Die Erfindung betrifft ferner einen Bausatz mit einer Scheibenbremse der vorstehend bezeichneten Art, wobei nach Maßgabe unterschiedlicher durch die Schwingungsdämpfungseinrichtung zu dämpfender Schwingungseinrichtung zu dämpfender Schwingungsfrequenzen entsprechend dimensionierte Zusatzmassen wahlweise anbringbar sind. Wie vorstehend bereits detailliert erläutert, ist die Zusatzmasse jeweils als separates Bauteil ausgebildet und die Schwingungsdämpfungseinrichtung umfasst ferner einen an dem Bremssattel oder an dem Bremsträger befestigten Aufnahmebolzen, über den die jeweilige Zusatzmasse an dem Bremssattel oder an dem Bremsträger fixierbar ist.

Die Erfindung ist im Folgenden beispielhaft anhand der folgenden Figuren erläutert.

Es stellen dar:
- Figur 1: eine perspektivische Gesamtansicht einer ersten Ausführungsform einer erfindungsgemäßen Scheibenbremse, wobei die Schwingungsdämpfungseinrichtung im montierten Zustand gezeigt ist;
- Figuren 2a - 2c: Detailansichten der Schwingungsdämpfungseinrichtung aus Figur 1 als Explosionszeichnungen, wobei drei Varianten des Aufnahmebolzens dargestellt sind;
- Figur 3: eine perspektivische Detailansicht der Schwingungsdämpfungseinrichtung aus Figur 1;
- Figur 4: eine perspektivische Gesamtansicht einer zweiten Ausführungsform einer erfindungsgemäßen Scheibenbremse, in der zwei Zusatzmassen an zwei Aufnahmestellen fixiert gezeigt sind;
- Figur 5: eine perspektivische Gesamtansicht der Scheibenbremse aus Figur 4, bei der die beiden Zusatzmassen in entgegengesetzte Richtungen ausgerichtet sind;
- Figur 6: eine perspektivische Gesamtansicht einer dritten Ausführungsform einer erfindungsgemäßen Scheibenbremse, bei der an einer Aufnahmestelle zwei Zusatzmassen und an einer weiteren Aufnahmestelle eine Zusatzmasse fixiert ist;
- Figur 7: eine perspektivische Gesamtansicht einer vierten Ausführungsform einer erfindungsgemäßen Scheibenbremse, bei der an zwei verschiedenen Aufnahmestellen jeweils eine Zusatzmasse und an einer Aufnahmestelle zwei Zusatzmassen fixiert sind;
- Figur 8: eine perspektivische Gesamtansicht einer fünften Ausführungsform einer erfindungsgemäßen Scheibenbremse, bei der an drei Aufnahmestellen jeweils eine Zusatzmasse fixiert ist;
- Figuren 9 bis 11: verschiedene Ansichten unterschiedlich dimensionierter Zusatzmassen.

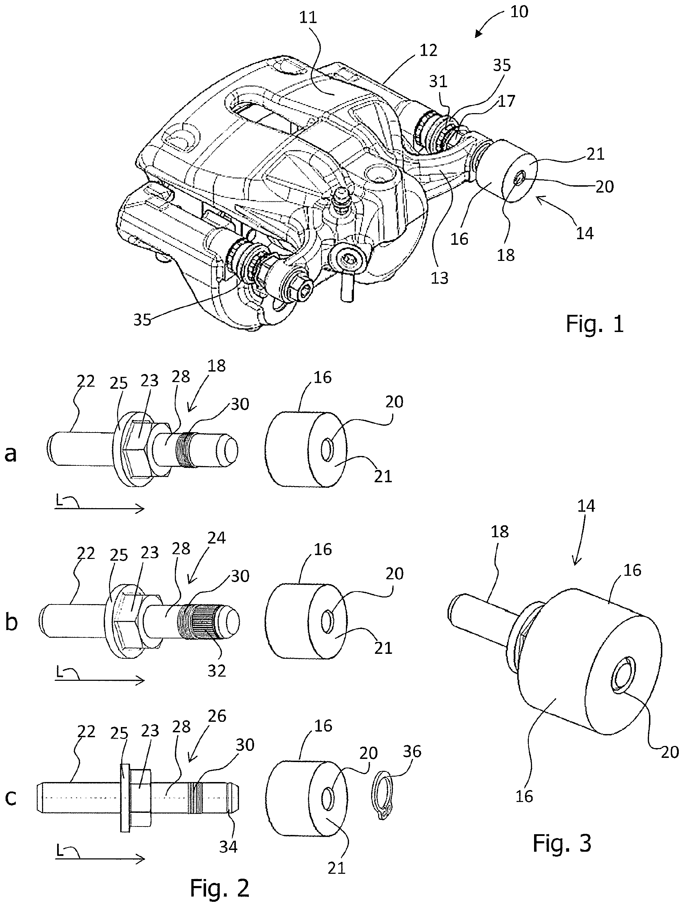

In der Figur 1 ist eine perspektivische Gesamtansicht einer ersten Ausführungsform einer erfindungsgemäßen Scheibenbremse 10 gezeigt. Die Scheibenbremse 10 umfasst eine Bremsbelaganordnung (nicht gezeigt) mit einem Reibbelag (nicht gezeigt) und einer Belagrückenplatte (nicht gezeigt), wobei der Reibbelag mit einer Bremsscheibe zum Erzielen einer Bremswirkung in Wechselwirkung bringbar ist. Ein die Bremsscheibe umgreifender Bremssattel 11 ist mittels eines einen Arm 13 des Bremssattels 11 durchsetzenden Aufnahmebolzens 18 an einer Führungsschraube 17 einer Führungseinrichtung 31 und darüber an einem Bremsträger 12 in Längsrichtung der Führungsschraube 17 verlagerbar befestigt. Der Aufnahmebolzen 18 ist Teil einer Schwingungsdämpfungseinrichtung 14, die ferner eine als separates Bauteil ausgebildete, zylinderförmige Zusatzmasse 16 aufweist, welche an einem gegenüber dem Bremssattel abgewandten Teil des Aufnahmebolzens angebracht ist. Die Zusatzmasse 16 ist somit über den Aufnahmebolzen 18 an dem Bremssattel 11 fixiert (vgl. Figuren 2a bis 2c). Der Aufnahmebolzen 18 steht dabei mit einer in der Zusatzmasse 16 ausgebildeten Aussparung 20 in Eingriff, welche sich in Längsrichtung L der Zusatzmasse 16 durch die gesamte Zusatzmasse 16 erstreckt. Dabei weist die Aussparung 20 an einer gegenüber dem Bremssattel 11 fernen Endfläche 21 einen geringeren Durchmesser auf als im Inneren des Zylinders.

An einem dem Bremssattel 11 zugewandten Teil 22 des Aufnahmebolzens 18 ist ein erstes Gewinde (nicht dargestellt) ausgebildet. Ein zu dem ersten Gewinde komplementäres zweites Gewinde ist in dem (Sechskant-) Kopf der Führungsschraube 17 ausgebildet und die beiden Gewinde greifen ineinander ein, sodass der Aufnahmebolzen 18 fest mit der Führungsschraube 17 und folglich mit dem Bremssattel 11 verbunden ist. Alternativ kann das zweite Gewinde direkt in dem Bremssattel 11, beispielsweise in dem Arm 13, ausgebildet sein, sodass der Aufnahmebolzen 18 in den Bremssattel 11 eingeschraubt werden kann. Das erste Gewinde am zugewandten Teil 22 wird bei der Montage über eine Werkzeugaufnahme 23, hier in Form eines Außensechskants, in einem Werkzeugaufnahmebereich des Aufnahmebolzens 18 in den Kopf der Führungsschraube 17 eingedreht. Benachbart zu der Werkzeugaufnahme 23 ist eine Scheibe 25 an dem Aufnahmebolzen 18 angeordnet, die nach der Montage bündig an einer Oberfläche des Arms 13 des Bremssattels 11 anliegt. Im montierten Zustand entspricht der Aufnahmebolzen 18 folglich einer Verlängerung der Führungsschraube 17 der Führungseinrichtung 31 des Bremssattels 11 über den Arm 13 des Bremssattels 11 hinaus. Entsprechend der Symmetrie der Führungsschraube 17 ist auch der Aufnahmebolzen 18 und die Zusatzmasse 16 im Wesentlichen zylinderförmig ausgestaltet. Die Führungseinrichtung 31 ist abschnittsweise durch einen Faltenbalg 35 aus Gummi geschützt.

In den Figuren 2a bis 2c sind drei Varianten der Schwingungsdämpfungseinrichtung 14 gezeigt, wovon der Aufnahmebolzen 18 ein Teil der Ersten ist. Zusätzlich zu dem Aufnahmebolzen 18 sind zwei Modifikationen des Aufnahmebolzens gezeigt, die als Aufnahmebolzen 24 und Aufnahmebolzen 26 bezeichnet sind (vgl. Figuren 2b und 2c). Wie den Figuren 2a bis 2c entnommen werden kann, sind alle Aufnahmebolzen 18, 24, 26 länglich ausgestaltet und sie weisen an ihren Mantelflächen 28 jeweils eine quer zu ihrer Längsrichtung L ausgerichtete Rillenstruktur 30 auf. Die beiden modifizierten Aufnahmebolzen 24, 26 weisen darüber hinaus alle Merkmale des Aufnahmebolzens 18 auf. Außerdem können erfindungsgemäß beliebige Merkmale der Aufnahmebolzen 18, 24 und 26 kombiniert werden.

Bei der Montage sind die Zusatzmassen 16 jeweils mit dem Aufnahmebolzen 18, 24, 26 zu verpressen. Die auf den Aufnahmebolzen 18 verpresste Zusatzmasse 16 ist in den Figuren 1 und 3 gezeigt. Durch das Verpressen verkrallen sich an dem Aufnahmebolzen 18, 24, 26 ausgebildete Rillenstrukturen, beispielsweise die Rillenstruktur 30, in einer Oberfläche, hier einer Innenumfangsfläche, der Zusatzmasse 16. Der Aufnahmebolzen 24 gemäß der ersten Modifikation weist hierzu neben der quer bezüglich der Längsrichtung L angeordneten Rillenstruktur 30 auch eine in der Längsrichtung L angeordnete Rillenstruktur 32 auf, die sich in Umfangsrichtung entlang des gesamten Umfangs des Aufnahmebolzens 24 erstreckt. Die Rillen verlaufen dabei parallel zueinander. Der Aufnahmebolzen 26 gemäß der zweiten Modifikation unterscheidet sich von dem Aufnahmebolzen 18 dadurch, dass an ihm an einem dem Bremssattel 11 abgewandten Ende eine Ringnut 34 ausgebildet ist. Ein Sicherungsring 36 umgreift den Aufnahmebolzen 26 derart, dass ein Ablösen der Zusatzmasse 16 von dem Aufnahmebolzen 26 wirkungsvoll verhindert wird.

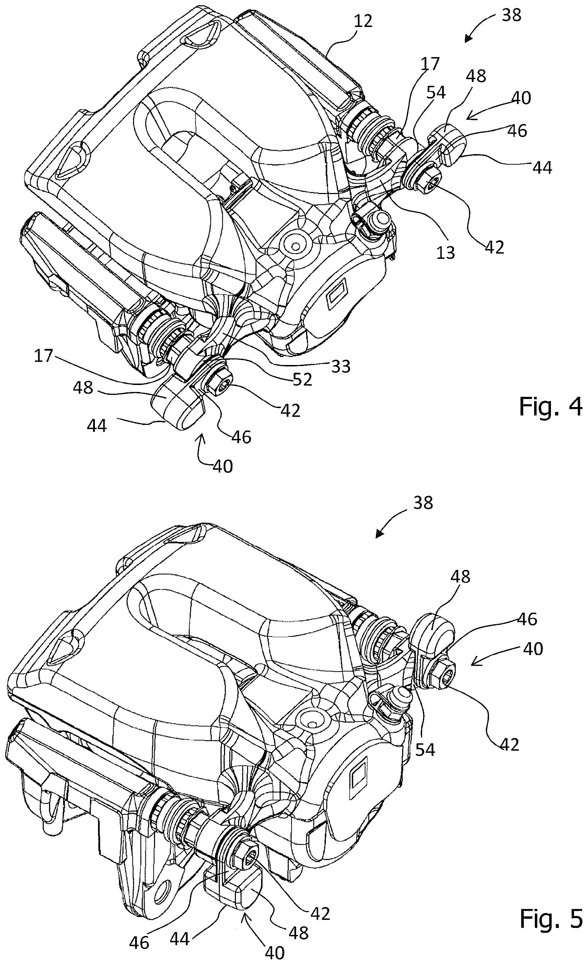

Eine in den Figuren 4 und 5 gezeigte Scheibenbremse 38 gemäß einer zweiten Ausführungsform der Erfindung unterscheidet sich von der Scheibenbremse 10 dadurch, dass anstatt der Schwingungsdämpfungseinrichtung 14 jeweils eine Schwingungsdämpfungseinrichtung 40 an einer ersten und an einer zweiten Aufnahmestelle 52, 54 angeordnet ist. Diese Aufnahmestellen 52, 54 sind an zwei verschiedenen Armen 13, 33 des Bremssattels 11 angeordnet. Die Schwingungsdämpfungseinrichtung 40 kann alle Merkmale der Schwingungsdämpfungseinrichtung 14 einzeln oder in Kombination aufweisen. Bei der in den Figuren gezeigten Schwingungsdämpfungseinrichtung 40 wird zur Befestigung von Zusatzmassen 44 anstatt des Aufnahmebolzens 18 eine Schraube 42 verwendet, welche hier als Maschinenschraube (Außensechskantkopf) ausgestaltet ist. Es ist insbesondere auch denkbar, anstatt der Schraube 42 einen der vorangehend beschriebenen Aufnahmebolzen 18, 24, 26 zu verwenden.

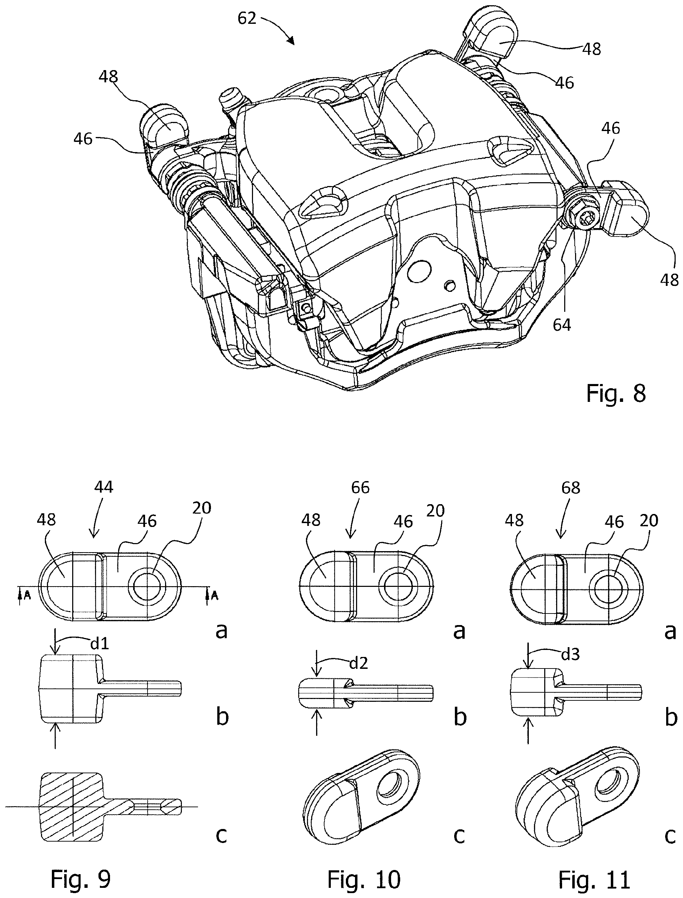

Die Zusatzmasse 44 weist jeweils einen Basisabschnitt 46 in Form einer flachen Befestigungszunge und einen Blockabschnitt 48 auf. Die Zusatzmasse 44 ist in den Figuren 9a bis 9d detailliert dargestellt und in Zusammenhang mit diesen Figuren detailliert beschrieben. Die Zusatzmassen 44 sind im in den Figuren gezeigten, montierten Zustand mit ihren Basisabschnitten 46 zwischen dem Arm 13 des Bremssattels 11 und dem Kopf der Schraube 42 eingespannt. Der Blockabschnitt 48 weist eine größere Masse auf als der Basisabschnitt 46 und die Befestigungszunge ist flächig an dem Arm 13 des Bremssattels 11 anliegend positioniert. In der Figur 4 sind die Zusatzmassen 44 derart ausgerichtet, dass die beiden Blockabschnitte 48 gegenüber den Basisabschnitten 46 in den beiden Zusatzmassen 44 entgegengesetzt zueinander ausgerichtet sind. In dem in Figur 4 gezeigten Ausführungsbeispiel erstrecken sich somit die Blockabschnitte 48 der Zusatzmassen 44 in Umfangsrichtung der Scheibenbremse beziehungsweise in Umfangsrichtung der zu bremsenden Bremsscheibe. Alternativ können die Zusatzmassen 44, wie in Figur 5 dargestellt, beispielsweise auch senkrecht zu dieser Umfangsrichtung ausgerichtet sein.

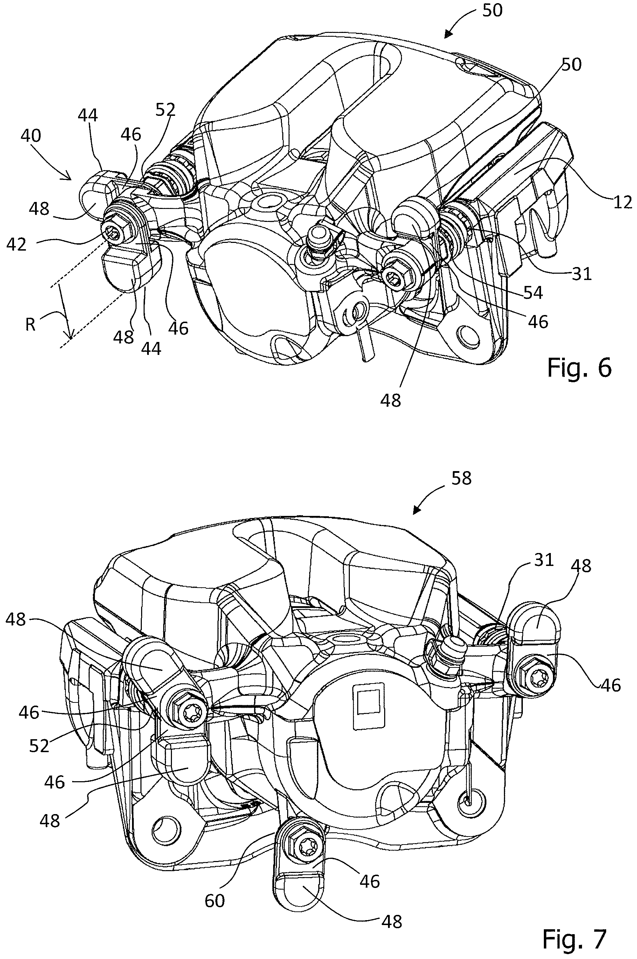

Eine in der Figur 6 gezeigte dritte Ausführungsform einer erfindungsgemäßen Scheibenbremse 50 unterscheidet sich von der Scheibenbremse 38 dadurch, dass an der Aufnahmestelle 52 zwei Zusatzmassen 44 angeordnet sind, die senkrecht zueinander ausgerichtet sind. Eine an der zweiten Aufnahmestelle 54 angeordnete Zusatzmasse 44 ist in eine weitere, andere Richtung ausgerichtet, in die keine der Zusatzmassen 44 an der ersten Aufnahmestelle ausgerichtet ist. Auch hier sind die Aufnahmestellen und die Schrauben 42 (d.h. Aufnahmebolzen) an je einer Führungsschraube der Führungseinrichtung 31 der Scheibenbremse angeordnet. Zur Ausrichtung der Zusatzmassen 44 können optional an dem Bremssattel 11 oder an dem Bremsträger 12 in den Figuren nicht gezeigte Vorsprünge ausgebildet sein, an denen sich die Blockabschnitte 48 derart abstützen, dass ein Verdrehen der Zusatzmasse, d.h. der Blockabschnitte 48 um die Basisabschnitte 46, verhindert wird.

Als Ausrichtung wird hier die Orientierung der Zusatzmasse 44 bezeichnet, d.h. die Richtung, in die sich die Blockabschnitte 48 von den Basisabschnitten 46 erstrecken. Zur Illustration ist in der Figur 6 ein Richtungsvektor R dargestellt, der die Ausrichtung einer der an der Aufnahmestelle 52 angeordneten Zusatzmassen 44 verdeutlicht. Da die Basisabschnitte 46 zumindest abschnittsweise an dem Bremssattel 11 unmittelbar anliegen, können Rillenstrukturen (nicht gezeigt) an den Oberflächen der Basisabschnitte 46 in einer Oberfläche des Bremssattels 11 verkrallt sein.

Eine in Figur 7 gezeigte vierte Ausführungsform einer erfindungsgemäßen Scheibenbremse 58 unterscheidet sich von der Scheibenbremse 50 dadurch, dass auf derselben Seite des Bremssattels 11 wie die erste Aufnahmestelle 52 und die zweite Aufnahmestelle 54 zusätzlich eine dritte Schwingungsdämpfungseinrichtung 40 an einer dritten Aufnahmestelle 60 angeordnet ist. Anders als die Aufnahmestellen 52 und 54 ist die Aufnahmestelle 60 nicht an einer Führungsschraube 17 der Führungseinrichtung 31 des Bremssattels 11 angeordnet, sondern als separate Aufnahmestelle 60 gegenüber der Führungseinrichtung 31 beabstandet ausgeführt. Die dritte Aufnahmestelle 60 ist im gezeigten Beispiel der dritte Spannpunkt der Scheibenbremse. Sie kann jedoch alternativ eigens für die Befestigung einer Schwingungsdämpfungseinrichtung ausgebildet sein.

Darüber hinaus weist die Scheibenbremse 58 alle Merkmale der Scheibenbremse 50 auf.

Eine in Figur 8 gezeigte fünfte Ausführungsform einer erfindungsgemäßen Scheibenbremse 62 unterscheidet sich von der Scheibenbremse 50 dadurch, dass auf einer zu der Seite des Bremssattels 11, auf der die erste und zweite Aufnahmestelle 52, 54 angeordnet ist, entgegengesetzten Seite eine vierte Aufnahmestelle 64 an einer der Führungsschrauben 17 der Führungseinrichtung 31 angeordnet ist. Darüber hinaus weist die Scheibenbremse 62 alle Merkmale der Scheibenbremse 58 auf.

Die Scheibenbremsen 10, 38, 50, 58 und 62 sind als Schwimmsattel-Scheibenbremse dargestellt. Sie können jedoch alternativ auch als Festsattel-Scheibenbremsen ausgestaltet sein.

In den Figuren 9 bis 11 sind die Zusatzmasse 44 in diversen Seitenansichten sowie in einer Querschnittsansicht (Figur 9c) entlang der in Figur 9a gekennzeichneten Schnittebene A und zwei modifizierte Zusatzmassen 66, 68 dargestellt. Die Zusatzmassen 66 und 68 unterscheiden sich von der Zusatzmasse 44 dadurch, dass ihr Blockabschnitt 48 jeweils kleiner bzw. größer ist als der der Zusatzmasse 44. Die Blockabschnitte 48 der drei Zusatzmassen 44, 66, 68 sind aus dem gleichen Material hergestellt. Die Basisabschnitte 46 der drei gezeigten Varianten der Zusatzmassen 44, 66, 68 weisen im Wesentlichen dieselbe Form auf. In den Figuren ist eine Dicke d3 des Blockabschnitts 48 der Zusatzmasse 68 größer als die Dicke d2 der Zusatzmasse 66 und kleiner als die Dicke d1 des Blockabschnitts 48 der Zusatzmasse 44. Folglich ist die Zusatzmasse 68 schwerer als die Zusatzmasse 66, aber leichter als die Zusatzmasse 44. Zum Beispiel kann die Zusatzmasse 44 80 Gramm, die Zusatzmasse 68 50 Gramm und die Zusatzmasse 66 35 Gramm schwer sein.

Die Zusatzmassen 16, 44, 66, 68 werden vorzugsweise in einem Kalt- oder Warmverformungsprozess aus einem Metall hergestellt. Alternativ können sie durch Sintern oder Gießen gefertigt sein. Der Blockabschnitt 48 kann aus einem anderen Werkstoff hergestellt sein als der Basisabschnitt 46. Insbesondere kann der Blockabschnitt 48 aus einem Werkstoff mit einer höheren Dichte hergestellt sein als der Basisabschnitt 46. Als Materialien kommen für den Basisabschnitt 46 beispielsweise Kunststoff und für den Blockabschnitt 48 beispielsweise Metall in Frage. Der Basisabschnitt kann sich in einer in den Figuren nicht gezeigten Ausführungsform beispielsweise in den Blockabschnitt hinein erstrecken oder den Blockabschnitt komplett durchsetzen, sodass dieser in zwei Bereiche aufgeteilt ist. Insbesondere Schwingungen der Zusatzmassen in Richtung der Dicke d können auf diese Weise effektiv gedämpft werden. Wenn der Blockabschnitt 48 aus einem anderen Werkstoff hergestellt ist als der Basisabschnitt 46, können die beiden Abschnitte 46, 48 aneinander verschraubt, verstemmt oder verschweißt sein. Alternativ können die beiden Abschnitte 46, 48 durch einen gemeinsamen Kunststoffmantel aneinander gefügt sein.

Ein Bausatz mit einer der Scheibenbremsen 10, 38, 50, 58 und 62 weist erfindungsgemäß diverse Zusatzmassen, beispielsweise mehrere Zusatzmassen 16, 44, 66 und 68 auf. Darüber hinaus kann der Bausatz auch diverse Aufnahmebolzen 60 und unterschiedlich dimensionierte Schrauben 42 für die Montage der Zusatzmassen aufweisen. Dadurch kann der Anwender flexibel auswählen, welche Zusatzmassen zur optimalen Schwingungsdämpfung verwendet werden.

Somit können anhand einfacher, universell verwendbarer Komponenten der Scheibenbremse, insbesondere vereinheitlichter Aufnahmebolzen und Zusatzmassen, unterschiedliche Massenverteilungen an dem Bremssattel/Bremsträger schnell und unkompliziert eingestellt werden. Dadurch wird die Weiterleitung von Reibschwingungen an den Bremssattel/Bremsträger wirkungsvoll unterbunden und die Abstrahlung von unerwünschten Geräuschen an die Umwelt vermieden.

## Patentansprüche

1. Scheibenbremse (10), insbesondere für ein Fahrzeug, umfassend:
- eine Bremsbelaganordnung mit einem Reibbelag und einer Belagrückenplatte, wobei der Reibbelag mit einer Bremsscheibe zum Erzielen einer Bremswirkung in Wechselwirkung bringbar ist, und
- zumindest eine an einem Bremssattel (11) oder an einem Bremsträger (12) angeordnete Schwingungsdämpfungseinrichtung (14) mit zumindest einer Zusatzmasse (16),
wobei die Zusatzmasse (16) als separates Bauteil ausgebildet ist und die Schwingungsdämpfungseinrichtung (14) ferner einen an dem Bremssattel (11) oder an dem Bremsträger (12) befestigten Aufnahmebolzen (18, 24, 26) umfasst, über den die Zusatzmasse (16) an dem Bremssattel (11) oder an dem Bremsträger (12) fixierbar ist,
wobei der Aufnahmebolzen (18, 24, 26) länglich ausgestaltet ist und an seiner Mantelfläche eine in seiner Längsrichtung (L) oder/und quer zu seiner Längsrichtung (L) ausgerichtete Rillenstruktur (30, 32) aufweist,
**dadurch gekennzeichnet, dass** die Zusatzmasse (16) derart durch Verpressen an dem Aufnahmebolzen (18, 24, 26) fixierbar ist, dass die Rillenstruktur (30, 32) in einer Oberfläche der Zusatzmasse (16) verkrallt ist.

2. Scheibenbremse nach Anspruch 1,
**dadurch gekennzeichnet, dass** der Aufnahmebolzen (18, 24, 26) mit einer in der Zusatzmasse (16) ausgebildeten Aussparung (20) in Eingriff steht.

3. Scheibenbremse nach Anspruch 1 oder 2,
**dadurch gekennzeichnet, dass** an einem dem Bremssattel (11) oder dem Bremsträger (12) zugewandten Teil (22) des Aufnahmebolzens (18, 24, 26) ein erstes Gewinde ausgebildet ist, welches über ein an dem Bremssattel (11) oder an dem Bremsträger (12) ausgebildetes, zu dem ersten Gewinde komplementäres zweites Gewinde mit dem Bremssattel (11) oder mit dem Bremsträger (12) fest verbunden ist.

4. Scheibenbremse nach einem der vorangehenden Ansprüche,
**dadurch gekennzeichnet, dass** der Aufnahmebolzen (18, 24, 26) oder/und die Zusatzmasse (16) im Wesentlichen zylinderförmig ausgestaltet ist.

5. Scheibenbremse nach einem der vorangehenden Ansprüche,
**dadurch gekennzeichnet, dass** in dem Aufnahmebolzen (26) an einem dem Bremssattel (11) oder dem Bremsträger (12) abgewandten Ende eine Ringnut (34) ausgebildet ist, in der ein Sicherungsring (36) den Aufnahmebolzen (26) derart umgreift, dass er ein Ablösen der Zusatzmasse (16) von dem Aufnahmebolzen (26) verhindert.

6. Scheibenbremse (38, 50, 58, 62), insbesondere für ein Fahrzeug, umfassend:
- eine Bremsbelaganordnung mit einem Reibbelag und einer Belagrückenplatte, wobei der Reibbelag mit einer Bremsscheibe zum Erzielen einer Bremswirkung in Wechselwirkung bringbar ist, und
- zumindest eine an einem Bremssattel (11) oder an einem Bremsträger (12) angeordnete Schwingungsdämpfungseinrichtung (40) mit zumindest einer Zusatzmasse (44, 66, 68),
wobei die Zusatzmasse (44, 66, 68) als separates Bauteil ausgebildet ist und die Schwingungsdämpfungseinrichtung (40) ferner einen an dem Bremssattel (11) oder an dem Bremsträger (12) befestigten Aufnahmebolzen (18, 24, 26, 42) umfasst, über den die Zusatzmasse (44, 66, 68) an dem Bremssattel (11) oder an dem Bremsträger (12) fixierbar ist,
**dadurch gekennzeichnet, dass** die Zusatzmasse (44, 66, 68) einen Basisabschnitt (46) in Form einer flachen Befestigungszunge und einen Blockabschnitt (48) aufweist, wobei der Blockabschnitt (48) eine größere Masse aufweist als der Basisabschnitt (46) und die Befestigungszunge flächig an dem Bremssattel (11) oder dem Bremsträger (12) anliegt.

7. Scheibenbremse nach Anspruch 6,
**dadurch gekennzeichnet, dass** der Aufnahmebolzen (18, 24, 26, 42) mit einer in der Zusatzmasse (44, 66, 68) ausgebildeten Aussparung (20) in Eingriff steht, wobei die Aussparung (20) als Kernlochbohrung in der Zusatzmasse (44, 66, 68) im Bereich des Basisabschnitts (46) ausgebildet ist.

8. Scheibenbremse nach einem der vorangehenden Ansprüche,
**dadurch gekennzeichnet, dass** eine Mehrzahl an Zusatzmassen (16, 44, 66, 68) an verschiedenen Aufnahmestellen (52, 54, 64) an dem Bremssattel (11) oder an dem Bremsträger (12) über im Wesentlichen gleiche Aufnahmebolzen (18, 24, 26, 42) fixierbar sind, wobei zumindest zwei der Zusatzmassen (16, 44, 66, 68) an bezüglich der Bremsscheibe entgegengesetzten Seiten des Bremssattels (11) oder des Bremsträgers (12) angeordnet sind.

9. Scheibenbremse nach Anspruch 7 oder 8,
**dadurch gekennzeichnet, dass** zumindest zwei der Zusatzmassen (44, 66, 68) unterschiedliche Massen aufweisen und/oder ihre Blockabschnitte (48) bezüglich der Basisabschnitte (46) unterschiedlich ausgerichtet sind.

10. Scheibenbremse nach einem der Ansprüche 6 bis 9,
**dadurch gekennzeichnet, dass** an dem/den Basisabschnitt/en (46) jeweils eine Rillenstruktur ausgebildet ist, die in einer Oberfläche des Bremssattels (11) oder des Bremsträgers (12) verkrallt ist.

11. Scheibenbremse nach einem der Ansprüche 8 bis 10,
**dadurch gekennzeichnet, dass** zumindest zwei der Zusatzmassen (16, 44, 66, 68) über denselben Aufnahmebolzen (18, 24, 26, 42) an derselben Aufnahmestelle (52) am Bremssattel (11) oder am Bremsträger (12) fixierbar sind.

12. Scheibenbremse nach einem der vorangehenden Ansprüche,
**dadurch gekennzeichnet, dass** die Zusatzmasse/n (16, 44, 66, 68) aus einem Material hergestellt ist/sind, welches eine höhere Dichte oder/und Elastizität aufweist als das Material, aus dem der Bremssattel (11) oder der Bremsträger (12) in der Umgebung der jeweiligen Aufnahmestelle (52, 54, 60, 64) hergestellt ist.

13. Scheibenbremse nach einem der vorangehenden Ansprüche,
**dadurch gekennzeichnet, dass** diese als Festsattel-Scheibenbremse ausgestaltet ist, wobei der Bremssattel (11) die Bremsscheibe umgreift und die Schwingungsdämpfungseinrichtung (14, 40) an dem Bremssattel (11) angeordnet ist.

14. Scheibenbremse nach einem der Ansprüche 1 bis 12,
**dadurch gekennzeichnet, dass** diese als Schwimmsattel-Scheibenbremse ausgestaltet ist, wobei der Bremssattel (11) die Bremsscheibe umgreift und verlagerbar an dem Bremsträger (12) angebracht ist.

15. Scheibenbremse nach Anspruch 14,
**dadurch gekennzeichnet, dass** der Aufnahmebolzen (18, 24, 26, 42) eine über eine Oberfläche des Bremssattels (11) hinaus verlängerte Führungsschraube (17) einer Führungseinrichtung (31) des Bremssattels (11) ist.

16. Bausatz umfassend eine Scheibenbremse nach einem der Ansprüche 1 bis 15, wobei nach Maßgabe unterschiedlicher durch die Schwingungsdämpfungseinrichtung (14, 40) zu dämpfender Schwingungsfrequenzen entsprechend dimensionierte Zusatzmassen (16, 44, 66, 68) wahlweise anbringbar sind.

## Claims

1. A disc brake (10), in particular for a vehicle, comprising:
- a brake pad assembly with a friction pad and a pad back plate, the friction pad being engageable with a brake disc in order to achieve a braking effect, and
- at least one vibration-damping device (14) with at least one additional mass (16) arranged on a brake caliper (11) or on a brake carrier (12),
wherein the additional mass (16) is embodied as a separate component and the vibration-damping device (14) further comprises locating bolts (18, 24, 26) fastened to the brake caliper (11) or to the brake carrier (12) by means of which the additional mass (16) can be fixed to the brake caliper (11) or to the brake carrier (12),
wherein the locating bolt (18, 24, 26) is elongate and has on its lateral surface a groove structure (30, 32) aligned in its longitudinal direction (L) and/or transverse to its longitudinal direction (L),
**characterized in that** the additional mass (16) can be fixed by pressing to the locating bolt (18, 24, 26) such that the groove structure (30, 32) engages in a surface of the additional mass (16).

2. The disc brake according to Claim 1,
**characterized in that** the locating bolts (18, 24, 26) engage with a recess (20) provided in the additional mass (16).

3. The disc brake according to Claim 1 or 2,
**characterized in that** a first thread is provided on a part (22) of the locating bolt (18, 24, 26) facing toward the brake caliper (11) or the brake carrier (12), the thread being securely connected to the brake caliper (11) or to the brake carrier (12) by means of a second thread, provided on the brake caliper (11) or on the brake carrier (12), that is complementary to the first thread.

4. The disc brake according to any one of the preceding claims,
**characterized in that** the locating bolt (18) and/or the additional mass (16) are/is substantially cylindrical.

5. The disc brake according to any one of the preceding claims,
**characterized in that** an annular groove (34) is provided in the locating bolt (26) at an end facing away from the brake caliper (11) or the brake carrier (12) in which a circlip (36) engages around the locating bolt (26) such that it prevents the additional mass (16) from detaching from the locating bolt (26).

6. A disc brake (38, 50, 58, 62), in particular for a vehicle, comprising:
- a brake pad assembly with a friction pad and a pad back plate, the friction pad being engageable with a brake disc in order to achieve a braking effect, and
- at least one vibration-damping device (40) with at least one additional mass (44, 66, 68) arranged on a brake caliper (11) or on a brake carrier (12),
wherein the additional mass (44, 66, 68) is embodied as a separate component and the vibration-damping device (40) further comprises locating bolts (18, 24, 26, 42) fastened to the brake caliper (11) or to the brake carrier (12) by means of which the additional mass (44, 66, 68) can be fixed to the brake caliper (11) or to the brake carrier (12),
**characterized in that** the additional mass (44, 66, 68) has a base portion (46) in the form of a flat fastening tab and a block portion (48), the block portion (48) having a greater mass than the base portion (46) and the fastening tab lying flat against the brake caliper (11) or the brake carrier (12).

7. The disc brake according to Claim 6,
**characterized in that** the locating bolt (18, 24, 26, 42) engages with a recess (20) provided in the additional mass (44, 66, 68), the recess (20) being embodied as a core hole bore in the additional mass (44, 66, 68) in the region of the base portion (46).

8. The disc brake according to any one of the preceding claims,
**characterized in that** a plurality of additional masses (16, 44, 66, 68) can be fixed to the brake caliper (11) or to the brake carrier at different receiving points (52, 54, 64) by means of substantially equivalent locating bolts (18, 24, 26, 42), wherein at least two of the additional masses (16, 44, 66, 68) are arranged on opposite sides of the brake caliper (11) or the brake carrier (12) with respect to the brake disc.

9. The disc brake according to Claim 7 or 8,
**characterized in that** at least two of the additional masses (44, 66, 68) have different masses and/or their block portions (48) are aligned differently with respect to the base portions (46).

10. The disc brake according to any one of Claims 6 to 9,
**characterized in that** a respective groove structure is provided on the base portion or base portions (46) that engages in a surface of the brake caliper (11) or of the brake carrier (12).

11. The disc brake according to any one of Claims 8 to 10,
**characterized in that** at least two of the additional masses (16, 44, 66, 68) can be fixed to the brake caliper (11) or to the brake carrier (12) at the same receiving point (52) by means of the same locating bolt (18, 24, 26, 42).

12. The disc brake according to any one of the preceding claims,
**characterized in that** the additional mass or additional masses (16, 44, 66, 68) is or are made of a material having a greater density and/or elasticity than the material of which the brake caliper (11) or brake carrier (12) in the vicinity of the respective receiving point (52, 54, 60, 64) is made.

13. The disc brake according to any one of the preceding claims,
**characterized in that** it is embodied as a fixed-caliper disc brake, wherein the brake caliper (11) engages around the brake disc, and the vibration-damping device (14, 40) is arranged on the brake caliper (11).

14. The disc brake according to any one of Claims 1 to 12,
**characterized in that** it is embodied as a floating-caliper disc brake, wherein the brake caliper (11) engages around the brake disc and is displaceably mounted on the brake carrier (12).

15. The disc brake according to Claim 14, **characterized in that** the locating bolt (18, 24, 26, 42) is a guide screw (17) of a guide mechanism (31) of the brake caliper (11) that is extended beyond a surface of the brake caliper (11).

16. A kit comprising a disc brake according to any one of Claims 1 to 15, wherein commensurately dimensioned additional masses (16, 44, 66, 68) can optionally be put in place according to different vibration frequencies to be dampened by the vibration-damping device (14, 40).

## Revendications

1. Frein à disque (10), en particulier pour un véhicule, comprenant :
- un ensemble de garniture de frein avec une garniture de friction et une plaquette porte-garniture, la garniture de friction pouvant être amenée à interagir avec un disque de frein pour obtenir un effet de freinage, et
- au moins un dispositif d'amortissement de vibrations (14) disposé sur un étrier de frein (11) ou sur un flasque de frein (12) avec au moins une masse additionnelle (16),
dans lequel la masse additionnelle (16) est réalisée comme un composant séparé et le dispositif d'amortissement de vibrations (14) comprend en outre un boulon de fixation (18, 24, 26) fixé à l'étrier de frein (11) ou au flasque de frein (12) et par l'intermédiaire duquel la masse additionnelle (16) peut être fixée à l'étrier de frein (11) ou au flasque de frein (12),
dans lequel le boulon de fixation (18, 24, 26) est configuré de manière allongée et présente sur sa surface latérale une structure rainurée (30, 32) orientée dans la direction longitudinale (L) de celui-ci ou/et transversalement à la direction longitudinale (L) de celui-ci,
**caractérisé en ce que** la masse additionnelle (16) peut être fixée au boulon de fixation (18, 24, 26) par compression de telle sorte que la structure rainurée (30, 32) s'accroche à une surface de la masse additionnelle (16).

2. Frein à disque selon la revendication 1, **caractérisé en ce que** le boulon de fixation (18, 24, 26) est en prise avec un évidement (20) réalisé dans la masse additionnelle (16).

3. Frein à disque selon la revendication 1 ou 2, **caractérisé en ce que** sur une partie (22) du boulon de fixation (18, 24, 26), tournée vers l'étrier de frein (11) ou le flasque de frein (12), est réalisé un premier filetage qui est relié solidement au flasque de frein (12) par l'intermédiaire d'un deuxième filetage réalisé sur l'étrier de frein (11) ou sur le flasque de frein (12) et complémentaire au premier filetage.

4. Frein à disque selon l'une quelconque des revendications précédentes, **caractérisé en ce que** le boulon de fixation (18, 24, 26) ou/et la masse additionnelle (16) est/sont configurés de manière substantiellement cylindrique.

5. Frein à disque selon l'une quelconque des revendications précédentes, **caractérisé en ce que** dans le boulon de fixation (26) à une extrémité détournée de l'étrier de frein (11) ou du flasque de frein (12), une rainure annulaire (34) est réalisée, dans laquelle un circlip (36) entoure le boulon de fixation (26) de telle sorte qu'il empêche le détachement de la masse additionnelle (16) du boulon de fixation (26).

6. Frein à disque (38, 50, 58, 62), en particulier pour un véhicule, comprenant :
- un ensemble de garniture de frein avec une garniture de friction et une plaquette porte-garniture, la garniture de friction pouvant être amenée à interagir avec un disque de frein pour obtenir un effet de freinage, et
- au moins un dispositif d'amortissement de vibrations (14) disposé sur un étrier de frein (11) ou sur un flasque de frein (12) avec au moins une masse additionnelle (44, 66, 68),
dans lequel la masse additionnelle (44, 66, 68) est réalisée comme un composant séparé et le dispositif d'amortissement de vibrations (40) comprend en outre un boulon de fixation (18, 24, 26) fixé à l'étrier de frein (11) ou au flasque de frein (12) par l'intermédiaire duquel la masse additionnelle (44, 66, 68) peut être fixée à l'étrier de frein (11) ou au flasque de frein (12),
**caractérisé en ce que** la masse additionnelle (44, 66, 68) présente une portion de base (46) sous la forme d'une patte de fixation plate et une portion formant bloc (48), dans lequel la portion formant bloc (48) présente une masse supérieure à la portion de base (46) et la patte de fixation s'applique de manière plane à l'étrier de frein (11) ou au flasque de frein (12).

7. Frein à disque selon la revendication 6, **caractérisé en ce que** le boulon de fixation (18, 24, 26, 42) est en prise avec un évidement (20) réalisé dans la masse additionnelle (44, 66, 68), l'évidement (20) étant réalisé sous la forme d'un avant-trou dans la masse additionnelle (44, 66, 68) au niveau de la portion de base (46).

8. Frein à disque selon l'une quelconque des revendications précédentes, **caractérisé en ce qu'**une pluralité de masses additionnelles (16, 44, 66, 68) peut être fixée en différentes positions de réception (52, 54, 64) à l'étrier de frein (11) ou au flasque de frein (12) au moyen de boulons de fixation (18, 24, 26, 42) substantiellement identiques, dans lequel au moins deux des masses additionnelles (16, 44, 66, 68) sont disposées sur des côtés opposés de l'étrier de frein (11) ou du flasque de frein (12) par rapport au disque de frein.

9. Frein à disque selon la revendication 7 ou 8, **caractérisé en ce qu'**au moins deux des masses additionnelles (44, 66, 68) présentent des masses différentes et/ou leurs portions formant bloc (48) sont orientées différemment par rapport aux portions de base (46).

10. Frein à disque selon l'une quelconque des revendications 6 à 9, **caractérisé en ce qu'**au niveau de la ou des portion(s) de base (46) est réalisée respectivement une structure rainurée qui s'accroche dans une surface de l'étrier de frein (11) ou du flasque de frein (12).

11. Frein à disque selon l'une quelconque des revendications 8 à 10, **caractérisé en ce qu'**au moins deux des masses additionnelles (16, 44, 66, 68) peuvent être fixées à l'étrier de frein (11) ou au flasque de frein (12) à la même position de réception (52) par l'intermédiaire du même boulon de fixation (18, 24, 26, 42).

12. Frein à disque selon l'une quelconque des revendications précédentes, **caractérisé en ce que** la ou les masse(s) additionnelle(s) (16, 44, 66, 68) est/sont fabriquée(s) dans un matériau qui présente une densité et/ou élasticité supérieure(s) au matériau dans lequel est fabriqué l'étrier de frein (11) ou le flasque de frein (12) autour du point de réception respectif (52, 54, 60, 64).

13. Frein à disque selon l'une quelconque des revendications précédentes, **caractérisé en ce que** celui-ci est configuré comme un frein à disque à étrier fixe, dans lequel l'étrier de frein (11) entoure le disque de frein et le dispositif d'amortissement de vibrations (14, 40) est disposé sur l'étrier de frein (11).

14. Frein à disque selon l'une quelconque des revendications 1 à 12, **caractérisé en ce que** celui-ci est configuré comme un frein à disque à étrier flottant, dans lequel l'étrier de frein (11) entoure le disque de frein et est rattaché de façon mobile au flasque de frein (12).

15. Frein à disque selon la revendication 14, **caractérisé en ce que** le boulon de fixation (18, 24, 26, 42) est une vis de guidage (17) d'un dispositif de guidage (31) de l'étrier de frein (11) qui se prolonge au-delà d'une surface de l'étrier de frein (11).

16. Kit de montage, comprenant un frein à disque selon l'une quelconque des revendications 1 à 15, dans lequel selon différentes fréquences de vibration à amortir par le dispositif d'amortissement de vibrations (14, 40) des masses additionnelles (16, 44, 66, 68) de dimension adéquate peuvent être attachées au choix.
